# FASCICULE DE BREVET EUROPEEN

(11) **EP 1 026 940 B1**
(45) Date de publication et mention de la délivrance du brevet: **29.01.2003**
(21) Numéro de dépôt: 99920937.2
(22) Date de dépôt: 28.05.1999
(51) Int. Cl.: A01G 23/095

(54) **DISPOSITIF D'ELAGAGE**
ENTASTVORRICHTUNG
DEVICE FOR LOPPING BRANCHES

(30) Priorité: 01.07.1998 FR 9808582
(43) Date de publication de la demande: 16.08.2000
(73) Titulaire: Ouvry, Michel, 14112 Biéville Beuville (FR)
(72) Inventeur: Ouvry, Michel, 14112 Biéville Beuville (FR)
(74) Mandataire: Verdier, Louis
(86) Numéro de dépôt international: FR9901253
(87) Numéro de publication internationale: WO00001218

(56) Documents cités:
- EP-A- 0 200 805
- WO-A-95/00004
- DE-A- 2 720 149
- DE-B- 1 254 900
- DE-U- 8 504 676
- FR-A- 2 701 628

## Description

La présente invention concerne le domaine de la sylviculture.

Plus précisément, l'invention se rapporte à un dispositif d'élagage, c'est-à-dire à un dispositif permettant de couper les branches au moins de la partie inférieure de troncs d'arbres vivants. On notera toutefois que le dispositif selon l'invention pourra aussi être utilisé pour l'ébranchage (opération consistant à couper toutes les branches d'un arbre à abattre) ou l'écorçage (opération consistant à enlever l'écorce de l'arbre pour faciliter le sciage).

L'opération d'élagage est effectuée dans le but de produire un bois présentant le moins de noeuds possible. En effet, de tels noeuds, qui déprécient la valeur du bois, résultent de la croissance de branches vertes ou de la présence sur les troncs de branches mortes adhérentes, qu'il convient donc d'éliminer.

L'élagage des arbres était autrefois effectué manuellement à l'aide d'outils appropriés tels que des sécateurs.

Il a ensuite été proposé pour procéder à cette opération, des sécateurs électriques ainsi que des scies linéaires ou circulaires actionnées par énergie électrique, hydraulique ou pneumatique.

D'autres outils plus perfectionnés ont ensuite été conçus de façon à permettre un élagage mécanisé automatique pouvant être effectué sans avoir à grimper dans les arbres ou se mettre à niveau des branches à élaguer d'une autre façon, par exemple à l'aide d'une plateforme.

D'une manière générale, ces dispositifs présentent un châssis destiné à être installé sur le pourtour d'un tronc d'arbre à élaguer, ledit châssis supportant au moins un organe de coupe et des moyens de déplacement de ce châssis le long du tronc permettant audit organe de coupe d'entrer en action et de sectionner les branches à élaguer au fur et à mesure que le dispositif grimpe le long du tronc supportant celles-ci.

Certains de ces dispositifs d'élagage proposés par l'état de la technique se déplacent le long du tronc de l'arbre à élaguer en suivant une trajectoire hélicoïdale. C'est le cas notamment de la machine décrite dans les documents de brevet FR-A-1427073, FR-A-2701628, FR-A-1469748, EP-A-118 895.

D'autres dispositifs d'élagage sont conçus pour se déplacer en translation linéaire verticale le long des troncs d'arbres à élaguer. C'est notamment le cas des machines décrites dans les documents de brevets DE-A-2720149, DE-A-4038573 et EP-A-2100805.

Ces dispositifs automatiques d'élagage connus de l'état de la technique présentent un certain nombre d'inconvénients.

En premier lieu, ils sont généralement d'une grande complexité technique ce qui rend leur coût élevé. L'opération d'élagage est une opération coûteuse en temps et qui ne génère dans l'immédiat aucune recette puisque les arbres élagués ne peuvent être abattus que 20, 30 ou 40 ans plus tard. L'opération d'élagage étant déjà en elle-même une opération coûteuse, il existe donc un besoin pour un dispositif d'élagage présentant une productivité la plus élevée possible. Or, les dispositifs connus de l'état de la technique présentent également pour inconvénient de n'autoriser qu'une productivité relativement faible.

On notera également que ces dispositifs de l'art antérieur mettent généralement en oeuvre des organes de coupe intégrant au moins une scie, notamment une scie circulaire. Or, il s'avère que l'élagage par sciage ralentit la cicatrisation du tissu ligneux constituant le bois.

D'autres dispositifs ne mettent pas en oeuvre une coupe par sciage mais un sectionnement des branches grâce à des organes de coupe se présentant sous la forme de couteaux qui non seulement sectionnent les branches à élaguer mais blessent également l'arbre au niveau de son écorce, notamment lorsque le châssis se déplacant le long du tronc et patine lorsqu'il rencontre de grosses branches à élaguer. Les organes de coupe de ce type de dispositifs peuvent donc abîmer le cambium de l'arbre et ainsi diminuer la valeur marchande du bois qui sera débité à partir d'un tel tronc.

L'objectif de la présente invention est de proposer un dispositif d'élagage ne présentant pas les inconvénients des dispositifs de l'état de la technique et notamment permettant d'opérer rapidement et proprement.

En particulier, un des objectifs de la présente invention, est de proposer un tel dispositif permettant d'effectuer une coupe par tranchage des branches à élaguer. Un tel tranchage présente en effet l'avantage d'impliquer une coupure franche et nette des branches, propice à une cicatrisation rapide du bois et permettant de proscrire toute atteinte du cambium de l'arbre.

Un autre objectif de la présente invention est de décrire un tel dispositif présentant un rendement supérieur à ceux des dispositifs de l'art antérieur.

Encore un autre objectif de la présente invention est de divulguer un tel dispositif qui puisse être utilisé avec différents types d'arbres et notamment les arbres présentant un tronc de forme tronconique, tels que les résineux et certains feuillus. A ce sujet, on notera que les dispositifs de l'art antérieur sont généralement peu adaptés à l'élagage des arbres dont le diamètre des troncs varie suivant la hauteur de ceux-ci, tels que les résineux. Or, les résineux sont des espèces à croissance rapide d'un intérêt économique grandissant. Il existe donc incontestablement un besoin pour un dispositif d'élagage particulièrement adapté à la forme de leur tronc. Cet objectif est également atteint grâce à l'invention.

Encore un autre objectif de la présente invention est de proposer un tel dispositif qui ne risque pas d'abîmer l'arbre, notamment lorsqu'il rencontre une branche à élaguer de section importante.

Enfin, un objectif de l'invention est de décrire un tel dispositif qui présente une grande stabilité lors de sa mise en oeuvre.

Ces objectifs, ainsi que d'autres qui apparaîtront par la suite sont atteints grâce à l'invention qui concerne un dispositif d'élagage incluant un châssis destiné à être installé sur le pourtour d'un tronc d'arbre à élaguer et supportant au moins un organe de coupe de branches portées par ledit tronc, et des moyens de déplacement dudit châssis le long dudit tronc, caractérisé en ce qu'il présente au moins un chariot monté sur ledit châssis auquel est fixé ledit organe de coupe et des moyens de déplacement radial dudit chariot permettant de plaquer en permanence ledit organe de coupe contre ledit tronc.

La caractéristique essentielle de la présente invention consiste donc à prévoir des moyens permettant de déplacer radialement le ou les chariots qui portent un organe de coupe de façon à plaquer en permanence celui-ci contre le tronc. Une telle caractéristique permet de s'assurer que l'organe de coupe supporté par le chariot est toujours en contact avec le tronc, notamment lorsque celui-ci présente un diamètre variant selon sa hauteur. Une telle caractéristique permet d'assurer une coupe efficace des branches à élaguer à leur base tout en évitant d'attaquer le tronc en des zones où il ne présente pas de branches à supprimer.

Comme il sera explicité ci-après plus en détail, on pourra envisager différents moyens mécaniques, hydrauliques, pneumatiques, etc... pour constituer lesdits moyens de déplacement radial du chariot.

En ce qui concerne les moyens de déplacement du châssis le long du tronc, ceux-ci pourront être télécommandés ou bien actionnés grâce à un circuit électrique ou hydraulique avec un générateur au sol et des moyens de liaison adéquats préférentiellement flexibles, au reste du dispositif.

Le dispositif selon l'invention pourra être conçu avec un nombre de chariots variable notamment en fonction du diamètre des arbres à élaguer. Toutefois, ce dispositif comprendra préférentiellement trois chariots, ce nombre étant susceptible de s'adapter à une gamme élevée de diamètre de tronc. Egalement préférentiellement, ces trois chariots seront équirépartis sur le châssis. On notera qu'une telle caractéristique contribuera à équirépartir l'effort de coupe sur l'ensemble du pourtour du tronc mais contribuera également à la stabilisation du dispositif. A ce sujet, on notera que d'autres caractéristiques de la présente invention qui seront décrites ci-après contribuent également à la stabilisation de celui-ci, stabilisation qui constitue par rapport aux dispositifs de l'art antérieur, encore un avantage supplémentaire.

Egalement selon une variante préférentielle de l'invention, ledit organe de coupe dont est équipé le dispositif d'élagage selon celle-ci inclut pour chaque chariot au moins un couteau. Le terme couteau utilisé ici s'entend comme désignant tout moyen permettant la coupe par tranchage des branches à élaguer dont l'intérêt a déjà été cité ci-dessus (coupe nette, rapidité de cicatrisation ...).

Selon une variante avantageuse tout à fait originale, chaque couteau du dispositif présente au moins deux lames supérieures décalées horizontalement l'une par rapport à l'autre. On entend par les termes "lames supérieures décalées horizontalement", des lames prévues sur le bord supérieur des couteaux dont les fils se trouvent dans des plans essentiellement horizontaux différents. Un tel décalage permet de répartir l'effort de coupe inculqué audit couteau et ainsi de renforcer son efficacité mais également sa durée de vie.

On notera par ailleurs, que selon une variante de l'invention, chaque organe de coupe inclut préférentiellement au moins deux couteaux et que les lames de ces deux couteaux sont toutes décalées horizontalement les unes par rapport aux autres.

Selon une autre variante intéressante de l'invention toutes les lames de tous les couteaux des organes de coupe de tous les chariots sont toutes décalées horizontalement les unes par rapport aux autres. En d'autres termes, aucune des lames de l'ensemble du dispositif ne présente un fil positionné dans le même plan essentiellement horizontal que ceux des autres lames. Une telle caractéristique permet donc de répartir sur une hauteur H de tronc la zone au niveau de laquelle les lames du dispositif sont en action. Une telle caractéristique contribue également à la stabilité du dispositif sur le tronc. Une telle caractéristique se révèle particulièrement avantageuse, notamment pour couper les branches d'une même couronne horizontale, par rapport à une version selon laquelle toutes les lames seraient situées dans le même plan horizontal et où la zone de coupe sur le tronc serait réduite approximativement à un cercle. Au contraire, selon l'invention, la mise en oeuvre des lames sur une section de hauteur H du tronc permet de répartir l'effort de tranchage inculqué par les moyens de déplacement du châssis supportant les chariots le long du tronc et d'éviter au dispositif de patiner sur celui-ci ou de s'arrêter.

Selon une variante avantageuse, la hauteur H mentionnée ci-dessus correspondant au décalage maximal entre les lames des différents chariots est comprise entre 140 mm et 250 mm.

Selon une variante particulièrement intéressante de l'invention chaque couteau présente une section transversale au moins partiellement incurvée. Le rayon de courbure de chaque couteau pourra varier au niveau des deux lames quand celui-ci présentera deux lames. Pour une des deux lames, il pourra ainsi être préférentiellement compris entre environ 60 mm et environ 100 mm tandis que pour l'autre lame il pourra être préférentiellement compris entre environ 90 mm et envrion 130 mm.Une telle caractéristique permet d'adapter la forme du couteau à la courbure du tronc et ainsi de renforcer le plaquage permanent de l'organe de coupe contre celui-ci.

Selon une variante de l'invention, au moins certains des couteaux présentent également des lames inférieures, c'est-à-dire des lames prévues sur leur bord inférieur permettant de couper d'éventuels restes de branches lorsque le dispositif selon l'invention descend le long du tronc.

Selon une autre caractéristique avantageuse de l'invention, chaque organe de coupe est fixé à un chariot par des moyens de fixation incluant au moins un élément formant ressort.

En ce qui concerne les moyens qui seront utilisés pour autoriser le déplacement radial de chaque chariot permettant de plaquer en permanence l'organe de coupe contre le tronc et ainsi d'assurer une meilleure efficacité de coupe des branches à élaguer, on pourra envisager différents modes de réalisation de ceux-ci. Toutefois, selon une variante préférentielle, ces moyens de déplacement radial incluent au moins un vérin. Lorsque dans la version préférentielle de l'invention le dispositif incluera trois chariots, chaque chariot incluera au moins un vérin. On notera que l'on pourra toutefois envisager d'autres modes de déplacement radial des chariots que des vérins sans sortir du cadre de l'invention.

Egalement préférentiellement chaque chariot sera monté coulissant dans une glissière fixée au châssis. Lorsque un ou des vérins seront utilisés, ceux-ci seront mis en oeuvre pour faire coulisser les chariots dans leur glissières correspondantes.

Selon une variante préférentielle de l'invention, le dispositif comprend des moyens d'arrêt automatique desdits moyens de déplacement dudit châssis le long dudit tronc.

Pour autoriser le déplacement du châssis le long du tronc on pourra également envisager différents moyens. Toutefois, selon une variante avantageuse, ces moyens incluent pour chaque chariot au moins une roue mue par au moins un moteur solidaires de ce chariot. Lorsque le dispositif incluera trois chariots, les trois moteurs seront commandés par un dispositif de commande unique. On notera que dans certains modes de réalisation on pourra également prévoir au niveau de ces moyens de déplacement des galets de guidage à proximité des roues fixées au châssis permettant d'augmenter encore la stabilité du dispositif lors de son ascension et de sa descente le long de celui-ci.

Le châssis utilisé sera préférentiellement un châssis modulaire, c'est-à-dire constitué de plusieurs modules pouvant être reliés de façon sécurisée entre eux, de façon à constituer un châssis fermé autour du tronc. Lorsque l'on prévoiera trois chariots, on pourra ainsi prévoir trois éléments de châssis modulaires supportant chacun un chariot.

L'invention, ainsi que les différents avantages qu'elle présente seront plus facilement compris grâce à la description qui va suivre d'un mode de réalisation de celle-ci en référence aux dessins dans lesquels :
- la figure 1 représente une vue partielle en coupe horizontale d'un dispositif d'élagage selon l'invention au niveau du châssis de celui-ci ;
- la figure 2 représente une vue en coupe transversale d'un dispositif montré à la figure 1, au niveau d'un des chariots ;
- la figure 3 représente une vue de face de la partie du dispositf montrée en coupe à la figure 2 ;
- la figure 4 représente une vue en coupe transversale d'une partie d'un organe de coupe ;
- la figure 5 représente une vue de face de l'organe de coupe représenté à la figure 4;
- la figure 6 représente une vue de dessus de l'organe de coupe représenté en figures 4 et 5 ;
- la figure 7 représente une vue déroulée symbolisant le positionnement horizontal des différentes lames des différents couteaux du dispositif ;
- la figure 8 représente schématiquement le mode d'action des couteaux du dispositif selon l'invention sur une partie de tronc présentant un gros diamètre ;
- la figure 9 représente schématiquement le mode d'action des couteaux du dispositif selon l'invention sur une partie de tronc présentant un petit diamètre.

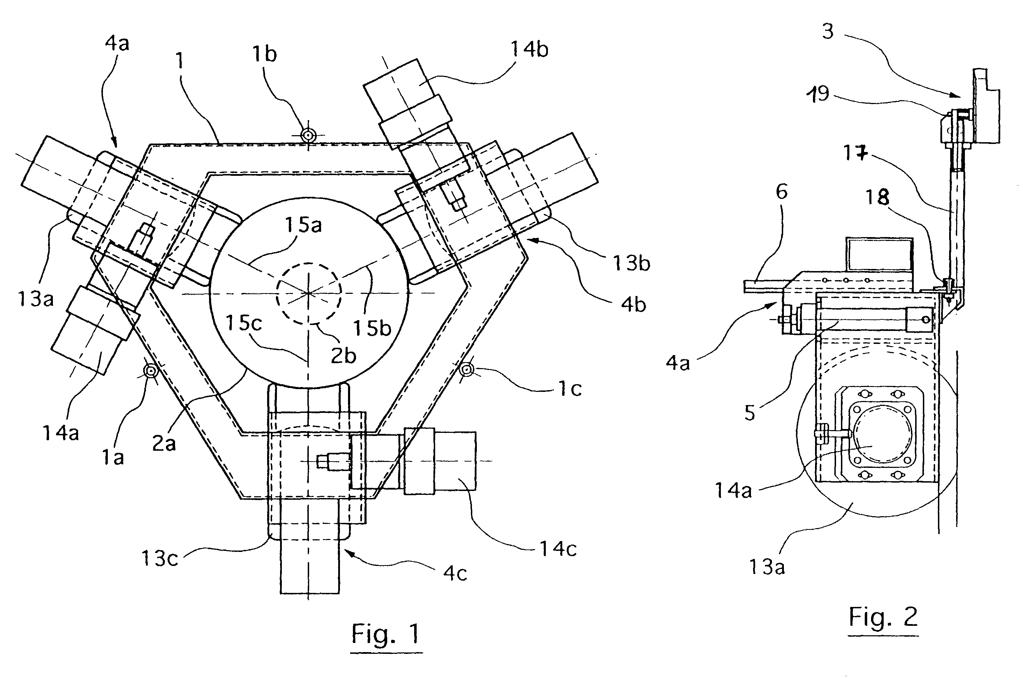

En référence à la figure 1, un mode préférentiel de réalisation de l'invention est représenté en coupe transversale et en coopération avec un tronc d'arbre à élaguer.

Ce dispositif comprend un châssis 1 constitué de trois modules reliés entre eux par des moyens de liaison adéquats 1a, 1b, 1c. La structure modulaire de ce châssis permet de monter celui-ci autour d'un tronc d'arbre à élaguer. Le châssis modulaire 1 présente une section transversale polygonale et supporte trois chariots 4a, 4b, 4c équirépartis sur son pourtour. Chacun des chariots 4a, 4b, 4c supporte des organes de coupe qui seront décrits en détail ci-après. Par ailleurs, ces chariots 4a, 4b, 4c sont chacun pourvus d'une roue, 13a, 13b, 13c. Chacune de ces roues coopère avec un moteur, les trois moteurs référencés respectivement 14 a, 14b, 14c étant commandés par un système de commande automatique commun. Les roues 13a, 13b, 13c, commandées par les moteurs 14a, 14b, 14c, constituent des moyens de déplacement du châssis 1 le long du tronc 2a. A cet effet, les moteurs 14a, 14b, 14c peuvent être mis en oeuvre de façon à mettre en rotation les roues 13a, 13b,13c pour entraîner le châssis dans un mouvement ascendant le long du tronc 2a, au cours duquel les branches à élaguer portées par au moins une partie du tronc 2a seront coupées, et être mis en oeuvre de façon à inculquer au châssis un mouvement descendant après l'opération d'élagage.

En ce qui concerne le système de commande des moteurs 14a, 14b,14c, celui-ci n'est pas représenté sur la figure 1. Ce dispositif inclut, dans le cadre du présent mode de réalisation des moyens de commande commandés par une source hydraulique au sol. On pourra toutefois envisager d'utiliser des moyens de commande de ces moteurs d'un autre type sans sortir du cadre de l'invention.

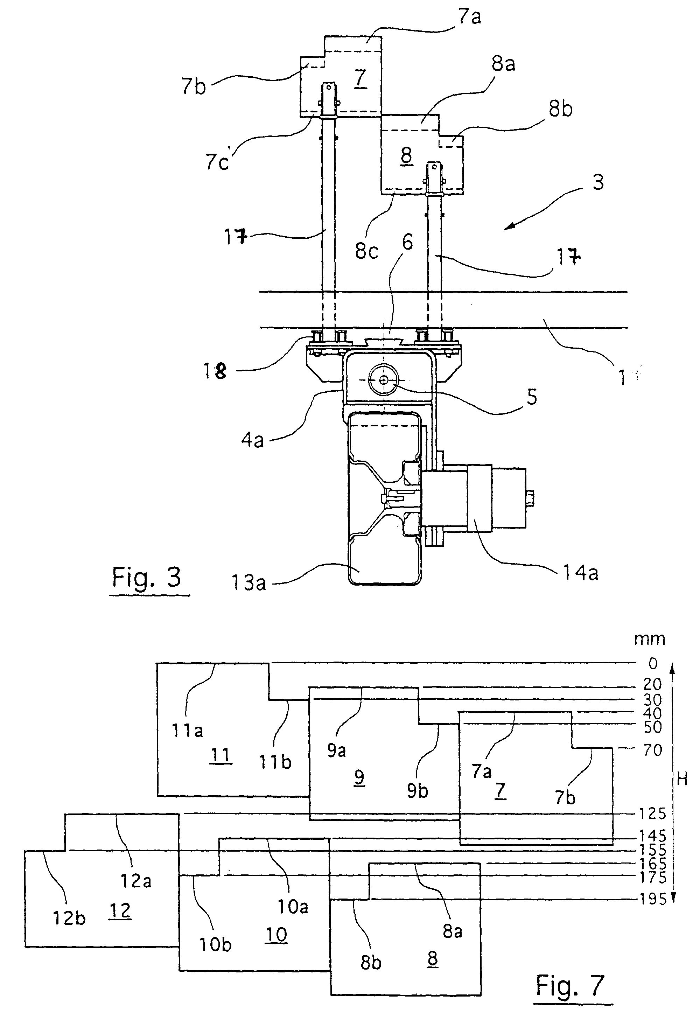

Grâce à des moyens de déplacement radial des chariots 4a, 4b, 4c, non visibles sur la figure 1 mais qui seront décrits en référence aux figures 2 et 3, il est possible de déplacer les chariots 4a, 4b, 4c selon les axes radiaux symbolisés par les lignes pointillées référencées 15a, 15b, 15c sur la figure 1. Ce déplacement radial permet de plaquer contre la surface du tronc à élaguer 2a, à la fois les roues 13a, 13b, 13c permettant le déplacement du châssis 1 le long de ce tronc, mais également les moyens de coupe portés par ces chariots.

Un grand avantage du dispositif d'élagage selon l'invention est ainsi de permettre une adaptation de celui au diamètre du tronc à élaguer. Le mode de réalisation ici représenté peut ainsi être utilisé pour des troncs variant d'un diamètre de 9 cm à un diamètre de 28 cm. Sur la figure 1, le tronc 2a représenté correspond à un tronc d'un diamètre de 28 cm et le diamètre minimal est symbolisé par une ligne pointillée 2b. Bien évidemment, il ne s'agit là que d'un exemple de mode de réalisation de l'invention, et il pourra être envisagé de modifier le dispositif représenté de façon à ce qu'il puisse s'adapter à des diamètres de tronc différents de ceux mentionnés ci-dessus.

On notera que l'équirépartition des chariots sur le pourtour du châssis 1 contribue à la stabilité dynamique du châssis sur le tronc à élaguer. La stabilisation dynamique est augmentée par le couple de rappel crée en cas d'inclinaison du dispositif.

En référence à la figure 2, représentant en coupe transversale le dispositif au niveau d'un des chariots, ce chariot 4a est solidarisé d'une part à des moyens de coupe 3 et d'autre part à l'ensemble constitué par la roue 13a et le moteur commandant celle-ci 14a. Les moyens de déplacement radial de ce chariot permettant de plaquer en permanence contre la surface du tronc à élaguer à la fois l'organe de coupe 3 et la roue 13a, incluent un vérin 5 qui permet de faire coulisser le chariot dans une glissière 6 prévu sur le châssis 1. L'organe de coupe 3 équipant chaque chariot sera décrit plus en détail ci-après. Cet organe de coupe inclut deux potences 17 (dont une seule est visible sur la figure 2) et est relié au chariot 4a par des moyens de fixation incluant deux ressorts 18 ayant un rôle de sécurité pour, en cas de besoin exceptionnel, permettre aux couteaux de se déplacer latéralement ou radialement.

Les vérins 5 du dispositif commandant les trois chariots 4a, 4b,4c et permettant le déplacement radial de ceux-ci le long des axes radiaux 15a, 15b, 15c sont actionnés par des moyens de commande à distance non représentés. Ces moyens de commande peuvent être couplés aux moyens de commande des moteurs 14a, 14b, 14c et actionnés par un opérateur au sol. On notera que la cinématique des organes de coupe est telle que la coaxialité du dispositif et de l'arbre traité n'est pas nécessaire. Les mouvements des vérins n'ont donc pas besoin d'être synchrones

En référence aux figures 3 à 6, l'organe de coupe 3 porté par le chariot 4a est représenté plus en détail.

Sur la figure 3, l'organe de coupe 3 est montré de face, le chariot 4a, la roue 13a et le moteur 14a étant quant à eux montrés en coupe.

L'organe de coupe représenté comprend deux couteaux 7, 8 montés sur des potences 17 fixés au chariot 4a par l'intermédiaire de moyens de fixation incluant, pour chaque potence 17, deux ressorts 18.

Chacun des deux couteaux 7,8 porte deux lames supérieures respectivement 7a, 7b et 8a, 8b. Sur chaque couteau 7, 8, ces lames supérieures sont décalées l'une par rapport à l'autre. Ces lames supérieures permettent de sectionner les branches à élaguer lors de l'ascension du dispositif le long du tronc. Chaque couteau porte également une lame inférieure 7c, 8c destinées à être mise en oeuvre lors de la descente du dispositif le long du tronc de façon à éliminer d'éventuels restes de branches.

Par ailleurs, les couteaux 7 et 8 sont également décalés horizontalement. Les lames 7a, 7b et 8a, 8b se trouvent donc toutes dans des plans horizontaux différents.

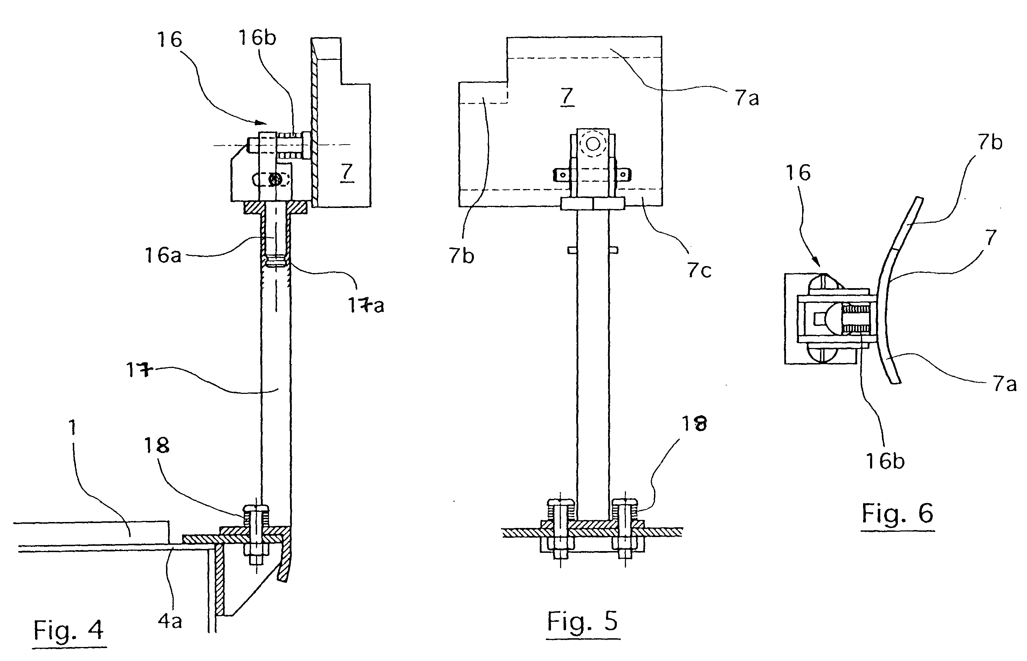

En référence aux figures 4 et 5, qui représentent une vue en coupe transversale et une vue de face du couteau 7 et de la potence 17 le reliant au chariot 4a supporté par le châssis 1, on notera que ce couteau 7 est relié à la potence 17 par des moyens de liaison 16 incluant un axe 16a coopérant avec un alésage 17a prévu dans la potence 17. Ces moyens de liaison 16 permettent un pivotement du couteau 7. Un tel pivotement permet aux couteaux des différents organes de coupe 3 supportés par les chariots 4a, 4b, 4c, de s'adapter au diamètre et à la nature de la surface du tronc d'arbre à élaguer .

Outre les moyens de pivotement du couteau 7 sur la potence 17, les moyens 16 de liaison du couteau à la potence incluent également un ressort 16b permettant d'absorber les variations momentanées de diamètre et de forme du tronc lors de l'ascension du dispositif le long de celui-ci .

Comme on peut le voir plus précisément sur la figure 6, le couteau 7 présente une forme incurvée facilitant sa coopération avec la surface du tronc. On notera que le rayon de courbure est différent au niveau de la partie correspondant à la lame 7a de celui correspondant à la lame 7b.

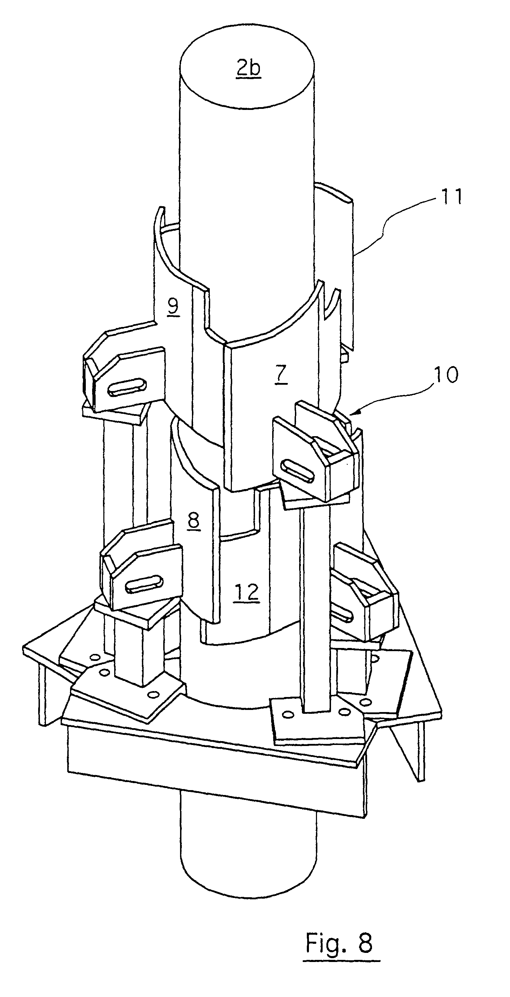

Les figures 2 à 6 se rapportent à la description du chariot 4a et de l'organe de coupe 3 supporté par celui-ci. Les autres chariots 4b, 4c sont identiques au chariot 4a. Les organes de coupe portés par les chariots 4b, 4c ne diffèrent de l'organe de coupe porté par le chariot 4a que par la longueur des potences 17. Ces potences sont conçues de façon tel que les deux lames de chaque couteau de chaque organe de coupe des trois chariots sont toutes décalées les unes par rapport aux autres. La vue déroulée de ces différents couteaux représentée à la figure 7 indique la position de ces lames les unes par rapport aux autres. Les couteaux 7,8 sont portés par le chariot 4a. Les couteaux 9,10 sont portés par le chariot 4b et les couteaux 11,12 sont portés par le chariot 4c. Chacun de ces couteaux présente deux lames décalées référencées 7a, 7b, 8a, 8b, 9a, 9b, 10a, 10b, 11a, 11b, 12a, 12b.

La figure 7 indique, en utilisant comme référence la lame 1 la, c'est-à-dire la lame positionnée dans le plan horizontal le plus haut, les distances en mm des autres lames par rapport à cette lame 11a.

Dans le mode de réalisation représenté, la hauteur H maximale entre la lame 8b positionnée dans le plan horizontal le plus bas et la lame 1 la est de 195 mm (hauteur H). Grâce à une telle disposition des couteaux et des organes de coupe, il est ainsi possible de répartir sur une hauteur de 195 mm de tronc, l'effort de coupe exercée par ces couteaux. Une telle répartition concourt à l'équilibre dynamique du dispositif autour du tronc. Selon une caractéristique essentielle de l'invention, les chariots supportant les différents organes de coupe peuvent être actionnés de façon à se déplacer radialement par rapport au tronc et s'adapter ainsi au diamètre de celui-ci .

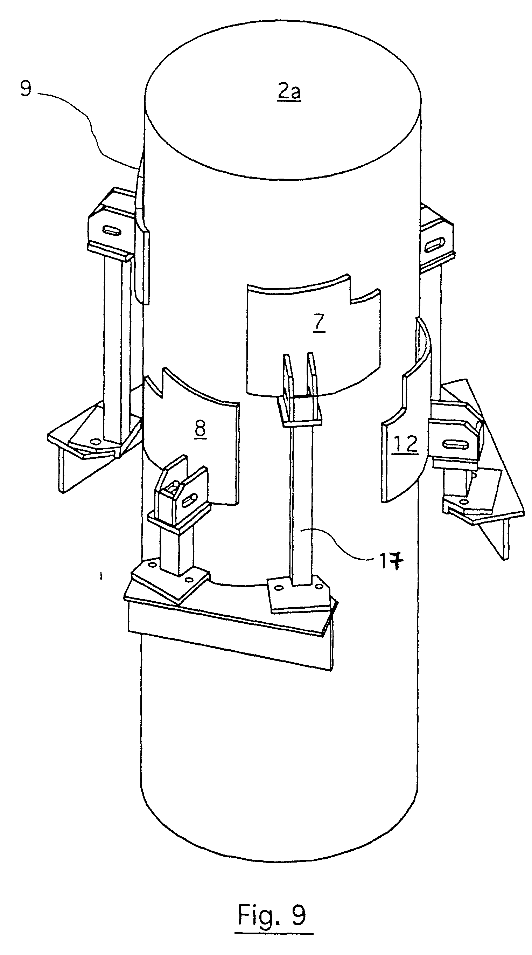

Sur les figures 8 et 9, on a représenté le positionnement des différents organes de coupe du dispositif sur un tronc 2a de diamètre 28 cm pour la figure 9 et sur un tronc 2b de diamètre 9 cm sur la figure 8. Pour les besoins de la clarté de la description, les autres parties du dispositif n'ont pas été représentées sur ces figures 8 et 9.

Grâce aux moyens de déplacement radial des différents chariots, il est possible de plaquer les différents couteaux 7 à 12 contre le tronc à élaguer, quelquesoit le diamètre de celui-ci dans la gamme 9 cm - 28 cm.

De plus, les moyens de pivotement des couteaux 7 sur les potences 17 permettent à ces couteaux de pivoter et de s'adapter à la diminution de diamètre du tronc. L'efficacité de coupe de ces couteaux se trouve ainsi renforcée.

Le mode de réalisation ici présenté a été testé. Pour cela, deux opérateurs ont été employés pour l'actionnement du dispositif et la manoeuvre de la source hydraulique. Le déplacement de la machine d'arbre en arbre a été effectué en posant le dispositif sur un diable.

Le châssis en position ouverte a été placé au pied de chaque arbre à élaguer puis fermé et verouillé autour du tronc de celui-ci.

La boîte de commande a été actionnéee par un opérateur de façon à agir sur les vérins et sur les moteurs. Une vitesse d'ascension et de descente le long du tronc jusqu'à 3 m/s a pu être obtenue avec une durée de cycle d'élagage d'environ 1 minute.

Après sa mise en oeuvre, le châssis a été réouvert et transporté jusqu'à un autre arbre.

Le mode de réalisation de l'invention ainsi décrit n'a pas pour objet de réduire la portée de celle-ci. Il pourra donc être apportée de nombreuses modifications. On pourra notamment envisager de réaliser le dispositif avec un nombre, une forme, et un positionnement des couteaux différent, de prévoir des organes de coupe disposés d'une façon également différentes ou encore de prévoir d'autres moyens de déplacement du châssis le long du tronc.

## Revendications

1. Dispositif d'élagage incluant un châssis (1) destiné à être installé sur le pourtour d'un tronc d'arbre à élaguer (2a,2b) et supportant au moins un organe de coupe de branches portées par ledit tronc, et des moyens de déplacement dudit châssis (1) le long dudit tronc (2a,2b),
**caractérisé en ce qu'**il présente au moins trois chariots (4a,4b,4c) équirépartis sur ledit châssis (1) sur chacun desquels est fixé un organe de coupe (3) et des moyens de déplacement radial (5,6) des chariots permettant de plaquer en permanence chaque organe de coupe (3) contre ledit tronc (2a,2b).

2. Dispositif selon la revendication 1 **caractérisé en ce que** ledit organe (3) de coupe inclut, pour chaque chariot (4a,4b,4c), au moins un couteau (7).

3. Dispositif selon la revendication 2 **caractérisé en ce que** chaque couteau présente au moins deux lames supérieures décalées (7a,7b) horizontalement l'une par rapport à l'autre.

4. Dispositif selon la revendication 2 ou 3 **caractérisé en ce que** chaque organe de coupe inclut, pour chaque chariot (4a,4b,4c), au moins deux couteaux (7,8).

5. Dispositif selon les revendications 3 et 4 **caractérisé en ce que** lesdites au moins deux lames (7a,7b,8a,8b) desdits au moins deux couteaux (7,8) sont toutes décalées horizontalement les unes par rapport aux autres.

6. Dispositif selon la revendication 5, **caractérisé en ce que** lesdites au moins deux lames (7a à 12a et 7b à 12b) desdits au moins deux couteaux (7 à 12) desdits au moins trois chariots (4a,4b,4c) sont toutes décalées horizontalement les unes par rapport aux autres.

7. Dispositif selon l'une des revendications 5 ou 6 **caractérisé en ce que** les lames en retrait (7b,8b) de chacun des deux couteaux (7,8) de chaque organe de coupe sont prévus sur les bords externes dudit organe.

8. Dispositif selon la revendication 6 ou 7 **caractérisé en ce que** le décalage maximal H entre lesdites lames est compris entre environ 140 mm et environ 250 mm.

9. Dispositif selon l'une quelconque des revendications 2 à 8 **caractérisé en ce que** chaque couteau (7) présente une section transversale au moins partiellement incurvée.

10. Dispositif selon la revendication 9 **caractérisé en ce que** le rayon de courbure dudit couteau varie au niveau des deux lames.

11. Dispositif selon l'une quelconque des revendications 2 à 10 **caractérisé en ce que** lesdits organes de coupe (3) présentent des moyens d'inclinaison (19) desdits couteaux.

12. Dispositif selon l'une quelconque des revendications 2 à 11 **caractérisé en ce que** ledit au moins un couteau présente au moins une lame inférieure.

13. Dispositif selon l'une des revendications 1 à 12 **caractérisé en ce que** chaque organe de coupe (3) est fixé à un chariot par des moyens de fixation incluant au moins un élément formant ressort de sécurité (18).

14. Dispositif selon l'une quelconque des revendications 1 à 13 **caractérisé en ce que** lesdits moyens de déplacement radial de chaque chariot incluent au moins un vérin (5).

15. Dispositif selon l'une des revendications 1 à 14 **caractérisé en ce que** chaque chariot (3) est monté coulissant dans une glissière (6) fixée audit châssis (1).

16. Dispositif selon l'une quelconque des revendications 1 à 15 **caractérisé en ce qu'**il comprend des moyens d'arrêt automatique desdits moyens de déplacement dudit châssis le long dudit tronc.

17. Dispositif selon l'une des revendications 1 à 16 **caractérisé en ce que** les moyens de déplacement dudit châssis (1) le long dudit tronc incluent, pour chaque chariot (4a,4b,4c), au moins une roue (13a,13b,13c) mue par au moins un moteur (14a,14b,14c) solidaires dudit chariot.

18. Dispositif selon l'une des revendications 1 à 17 carctérisé en ce que ledit châssis est constitué d'éléments de chassis modulaires destinés à être reliés entre eux de façon sécurisée pour constituer un châssis fermé autour du tronc.

## Claims

1. Pruning device including a frame (1) to be fixed to the circumference of a trunk of a tree to be pruned (2a,2b) and bearing at least one cutting device for branches on said trunk, and by means of movement of said frame (1) along said trunk (2a,2b), **characterized in that** it has at least three carriages (4a,4b,4c) equally distributed on said frame (1) on each of which is fixed a cutting device (3) and by means of radial movement (5,6) the carriages allow each cutting device (3) to be permanently laid flat against said trunk (2a,2b),

2. Device according to claim 1 **characterized in that** said cutting device (3) includes, for each carriage (4a,4b,4c), at least one cutter (7).

3. Device according to claim 2 **characterized in that** each cutter has at least two upper blades (7a,7b) each one horizontally staggered compared to the other.

4. Device according to claim 2 or 3 **characterized in that** each cutting device includes, for each carriage (4aAb,4c), at least two cutters (7,8).

5. Device according to claims 3 and 4 **characterized in that** at least two said blades (7a,7b,8a,8b) of at least two said cutters (7,8) are all horizontally staggered compared to each other.

6. Device according to claim 5, **characterized in that** at least two said blades (7a to 12a and 7b to 12b) of at least two said cutters (7 to 12) of at least three said carriages (4a,4b,4c) are all horizontally staggered compared to each other.

7. Device according to one of claims 5 or 6 **characterized in that** the withdrawn blades (7b,8b) of each of the two cutters (7,8) of each cutting device are provided on the external edges of said device.

8. Device according to claim 6 or 7 **characterized in that** the maximum stagger H between said blades is comprised between about 140 mm and about 250 mm.

9. Device according to any of the claims 2 to 8 **characterized in that** each cutter (7) has an at least partially curved transversal section.

10. Device according to claim 9 **characterized in that** the radius of the curvature of said cutter varies at the level of the two blades.

11. Device according to any of the claims 2 to 10 **characterized in that** said cutting devices (3) have tilting means (19) of said cutter.

12. Device according to any of the claims 2 to 11 **characterized in that** at least one said cutter has at least one tower blade.

13. Device according to one of the claims 1 to 12 **characterized in that** each cutting device (3) is fixed to a carriage by attachment means including at least one element forming a security spring (18).

14. Device according to any of the claims 1 to 13 **characterized in that** said radial movement means of each carriage includes at least one jack (5).

15. Device according to one of the claims 1 to 14 **characterized in that** each carriage (3) is mounted sliding in a slot (6) fixed to said frame (1).

16. Device according to any of the claims 1 to 15 **characterized in that** it includes automatic stop means of said movement means of said frame along said trunk.

17. Device according to one of the claims 1 to 16 **characterized in that** the movement means of said frame (1), along said trunk include for each carriage (4a,4b.4c), at least one wheel (13a,13b,13c) moved by at least one motor (14a, 14b, 14c) solidary of said carriage.

18. Device according to one of the claims 1 to 17 **characterized in that** said frame is constituted of modular frame elements to be safely linked to one another to make a closed frame around the trunk.

## Patentansprüche

1. Ausschneidevorrichtung, einschliesslich eines Fahrgestells (1), zur Aufstellung um einen zu beschneidenden Baumstamm (2a, 2b) herum bestimmt und zur Abstützung von mindestens einem Schneideorgan zum Auslichten von Zweigen, die besagter Stamm trägt, sowie Verfahrmittel des genanntes Fahrgestells (1) entlang des genannten Stammes (2a, 2b), **dadurch gekennzeichnet, dass** dieses mindestens drei Wägen aufweist (4a, 4b, 4c), die gleichmässig auf besagtem Fahrgestell (1) verteilt sind, worauf je ein Schneideorgan (3) befestigt ist sowie radiale Verfahrmittel (5, 6) der Wägen, die stets das Andrücken jedes Schneideorgans (3) gegen besagten Stamm (2a, 2b) gestatten,

2. Vorrichtung nach Anspruch 1, **dadurch gekennzeichnet, dass** besagtes Schneideorgan (3) für jeden Wagen (4a, 4b, 4c), mindestens ein Messer (7) einschliesst.

3. Vorrichtung nach Anspruch 2, **dadurch gekennzeichnet, dass** jedes Messer mindestens zwei obere zueinander waagrecht versetzte Klingen (7a, 7b) aufweist.

4. Vorrichtung nach Anspruch 2 bis 3, **dadurch gekennzeichnet, dass** jedes Schneideorgan für jeden Wagen (4a, 4b, 4c) mindestens zwei Messer (7, 8) einschließt.

5. Vorrichtung gemäß den Patentansprüchen 3 und 4, **dadurch gekennzeichnet, dass** besagte mindestens zwei Klingen (7a, 7b, 8a, 8b) der genannten mindestens zwei Messer (7, 8) alle waagrecht zueinander versetzt sind.

6. Vorrichtung nach Anspruch 5, **dadurch gekennzeichnet, dass** besagte mindestens zwei Messerklingen (7a bis 12a und 7b bis 12b) der mindestens zwei Messer (7 bis 12) der genannten mindestens drei Wägen (4a, 4b, 4c) alle waagrecht zueinander versetzt sind.

7. Vorrichtung nach einem der Ansprüche 5 oder 6, **dadurch gekennzeichnet, dass** die Klingen im Rückzug (7b, 8b) von jedem der beiden Messer (7, 8) von jedem Schneideorgan auf den äusseren Kanten des genannten Organs vorgesehen werden.

8. Vorrichtung nach Anspruch 6 oder 7, **dadurch gekennzeichnet , dass** die maximale Verlagerung H zwischen besagten Klingen zwischen etwa 140 mm und etwa 250 mm liegt.

9. Vorrichtung gemäss einem der Patentansprüche 2 bis 8, **dadurch gekennzeichnet, dass** jedes Messer (7) mindestens einen teilweise gekrümmten Querschnitt darstellt.

10. Vorrichtung nach Anspruch 9, **dadurch gekennzeichnet, dass** der Krümmungsradius des genannten Messers auf der Höhe der zwei Klingen variiert.

11. Vorrichtung gemäß einem der Patentansprüche 2 bis 10, **dadurch gekennzeichnet, dass** die besagten Schneideorgane (3) Schrägstellmittel (19) der genannten Messer aufweisen.

12. Vorrichtung gemäß einem der Patentansprüche 2 bis 11, **dadurch gekennzeichnet, dass** besagtes mindestens ein Messer mindestens eine untere Klinge aufweist.

13. Vorrichtung nach einem der Ansprüche 1 bis 12, **dadurch gekennzeichnet, dass** jedes Schneideorgan (3) an einem Wagen über Befestigungsmittel befestigt ist, wobei mindestens ein Element eingeschlossen ist, das eine Sicherheitsfeder (18) bildet.

14. Vorrichtung gemäß einem der Patentansprüche 1 bis 13, **dadurch gekennzeichnet, dass** besagte radiale Verfahrmittel von jedem Wagen mindestens eine Winde (5) einschliessen.

15. Vorrichtung nach einem der Ansprüche 1 bis 14, **dadurch gekennzeichnet, dass** jeder Wagen (3) gleitend in einem Schlitten (6) montiert ist, der am genannten Fahrgestell (1) befestigt wird.

16. Vorrichtung gemäß einem der Patentansprüche 1 bis 15, **dadurch gekennzeichnet, dass** diese selbsthemmende Mittel der genannten Verfahrmittel des genannten Fahrgestells über die gesamte Länge des genannten Stammes umfasst,

17. Vorrichtung nach einem der Ansprüche 1 bis 16, **dadurch gekennzeichnet, dass** die Verfahrmittel des genannten Fahrgestells (1), entlang der gesamten Länge des genannten Stammes für jeden Wagen (4a, 4b, 4c) mindestens ein Rad (13a, 13b, 13c) einschliessen, das über mindestens einen Motor (14a, 14b, 14c) kraftschlüssig mit dem genannten Wagen bewegt wird.

18. Vorrichtung nach einem der Ansprüche 1 bis 17, **dadurch gekennzeichnet, dass** besagtes Fahrgestell aus Modulen besteht, die dafür bestimmt sind, miteinander sicher verbunden zu werden, um um den Baumstamm herum ein geschlossenes Fahrgestell zu bilden.
